# FASCICULE DE BREVET EUROPEEN

(11) **EP 2 834 503 B1**
(45) Date de publication et mention de la délivrance du brevet: **11.04.2018**
(21) Numéro de dépôt: 13710502.9
(22) Date de dépôt: 22.02.2013
(51) Int. Cl.: F02C 7/36, F16H 1/36, F16H 57/04

(54) **DISPOSITIF DE RÉCUPÉRATION DE L'HUILE DE LUBRIFICATION D'UN RÉDUCTEUR ÉPICYCLOÏDAL**
VORRICHTUNG ZUR RÜCKGEWINNUNG VON SCHMIERÖL AUS EINEM EPIZYKLISCHEN UNTERSETZUNGSGETRIEBE
DEVICE FOR RECOVERING LUBRICATING OIL FROM AN EPICYCLIC REDUCTION GEAR

(30) Priorité: 23.02.2012 FR 1251655; 23.02.2012 FR 1251656
(43) Date de publication de la demande: 11.02.2015
(73) Titulaire: Safran Aircraft Engines, 75015 Paris (FR)
(72) Inventeur: GALLET, François, F-77550 Moissy-Cramayel Cedex (FR); BRIANTAIS, Boris, F-77550 Moissy-Cramayel Cedex (FR); SEREY, Jean-Pierre, F-77550 Moissy-Cramayel Cedex (FR); TAN-KIM, Alexandre, F-77550 Moissy-Cramayel Cedex (FR)
(74) Mandataire: Gevers & Orès
(86) Numéro de dépôt international: PCT/FR2013/050361
(87) Numéro de publication internationale: WO 2013/124590

(56) Documents cités:
- WO-A1-2011/142235
- JP-A- 2008 267 420
- US-A- 5 107 676
- US-A- 5 411 116

## Description

Le domaine de la présente invention est celui de la propulsion aéronautique et plus particulièrement celui des turboréacteurs double flux à fort taux de dilution, ou turbofans.

Les turbomachines modernes sont classiquement réalisées sous la forme d'un assemblage de modules qui peuvent comporter des parties fixes et des parties mobiles. Un module est défini comme un sous-ensemble d'une turbomachine qui présente des caractéristiques géométriques au niveau de ses interfaces avec les modules adjacents suffisamment précises pour qu'il puisse être livré individuellement et qui a subi un équilibrage particulier lorsqu'il comporte des parties tournantes. L'assemblage des modules permet de constituer un moteur complet, en réduisant au maximum les opérations d'équilibrage et d'appariement des pièces en interface.

Les turbofans comportent plusieurs étages de compresseur, notamment un compresseur basse pression (BP) et un compresseur haute pression (HP) qui appartiennent au corps primaire du moteur. En amont du compresseur basse pression est disposée une roue d'aubes mobiles de grande dimension, ou soufflante, qui alimente à la fois le flux primaire qui traverse les compresseurs BP et HP et le flux froid, ou flux secondaire, qui est dirigé directement vers une tuyère de flux froid, dite tuyère secondaire. La soufflante est entraînée par l'arbre de rotation du corps BP et tourne généralement à la même vitesse que lui. Il peut cependant être intéressant de faire tourner la soufflante à une vitesse de rotation inférieure à celle de l'arbre BP, notamment lorsque celle-ci est de très grande dimension, dans le but de mieux l'adapter aérodynamiquement. Pour cela on dispose un réducteur entre l'arbre BP et un arbre fan, qui est porteur de la soufflante. La soufflante, l'arbre fan et le réducteur font, en général, partie d'un même module, dénommé module fan ou module de soufflante.

Un des problèmes rencontrés avec les réducteurs sur les turbofans est qu'ils nécessitent des débits d'huile importants, qui peuvent atteindre 6 à 7000 l/h au décollage, pour assurer leur lubrification et le refroidissement de leurs pignons et paliers. Pour limiter les pertes par barattage, il est nécessaire d'amener l'huile précisément aux endroits voulus, puis de l'évacuer aussitôt son action de lubrification effectuée. Et parmi les types de réducteurs utilisés, on trouve les réducteurs à train épicycloïdaux, qui ont l'avantage d'offrir des taux importants de réduction de la vitesse de rotation, dans des encombrements réduits. En revanche ils présentent l'inconvénient d'avoir des pignons satellites qui se déplacent en tournant autour de l'axe de rotation de l'arbre d'entraînement du réducteur. Il faut donc imaginer des dispositifs pour, d'une part, amener l'huile, qui est issue d'un réservoir principal et d'une pompe de lubrification situés dans un repère fixe, sur ces pignons qui se situent dans un repère mobile et, d'autre part, récupérer cette huile après son passage sur les pignons et la ramener dans le repère fixe. Il convient en particulier de gérer la récupération de tels débits, en évitant, entre autres, que cette huile ne s'accumule dans le carter et ne s'échauffe par barattage.

Sur les réducteurs actuellement en service, l'huile est en général introduite au niveau des pignons et elle est collectée vers le fond du carter où elle descend naturellement par gravité. Une solution simple de récupération de l'huile existe également sur les réducteurs à train épicycloïdal, dans le cas où la couronne du train est mobile en rotation. Sa rotation permet en effet d'éjecter l'huile par centrifugation, vers une gouttière où elle est récupérée puis renvoyée au réservoir principal via une canalisation de récupération.

Une telle solution n'est pas applicable à un réducteur à train épicycloïdal, dans lequel la couronne extérieure est fixe. L'huile ne serait pas éjectée et pourrait s'accumuler dans le réducteur avec un barattage qui occasionnerait des pertes de rendement et un surdimensionnement du circuit d'huile pour prendre en compte l'échauffement produit.

Un réducteur à train épicycloïdal, avec une couronne extérieure fixe est connu du document US-A-5107676, voir la figure 5.

La présente invention a pour but de remédier à ces inconvénients en proposant un dispositif de récupération de l'huile d'un réducteur de turboréacteur qui soit compatible d'un réducteur à pignons mobiles et à couronne extérieure fixe.
A cet effet, l'invention a pour objet un réducteur à train épicycloïdal, comportant un pignon planétaire mobile en rotation autour d'un axe de rotation, des pignons satellites entraînés par ledit pignon planétaire et mobiles en rotation autour d'axes de satellites portés par un porte satellite, lesdits pignons satellites roulant sur une couronne fixe et ledit porte-satellites étant positionné axialement latéralement par rapport à ladite couronne, l'engrenage formé par les pignons des satellites et la couronne étant conformé pour éjecter axialement son huile de lubrification après usage, caractérisé en ce que le porte-satellites comporte une portion de surface positionnée en vis-à-vis dudit engrenage et formant moyen de guidage et de déflexion de ladite huile, de sa direction axiale vers la direction radiale, pour une éjection par centrifugation à son extrémité, et au moins une gouttière fixe de recueil de l'huile s'étendant radialement au-delà dudit porte-satellites et positionnée axialement en vis-à-vis de ladite extension radiale.

Le porte-satellites assure ainsi la récupération de l'huile de lubrification qui circule dans le repère mobile lié au réducteur et l'éjecte de ces parties mobiles, en utilisant son mouvement de rotation, pour la renvoyer dans le repère fixe dans lequel est installé le réducteur. La déflexion de l'huile de sa direction axiale vers une direction radiale permet de profiter pleinement de l'action de la force centrifuge générée par la rotation des pièces du réducteur et ainsi d'améliorer la capacité du système de lubrification à recueillir l'huile projetée par les pignons.

Avantageusement ladite extension radiale a la forme d'une fraction de tore. Une telle forme assure à la fois la fonction de récupération et celle d'éjection de l'huile de lubrification.

De préférence ladite extension radiale porte des palettes tournantes régulièrement disposées sur la circonférence du porte-satellites en s'étendant à l'intérieur du tore. Celles-ci sont destinées à faciliter l'éjection de l'huile en évitant son regroupement à la partie supérieure du tore.

De façon plus préférentielle les palettes tournantes sont, en coupe radiale en référence à l'axe de rotation commun, incurvées dans le sens opposé au sens de rotation du porte-satellites.

Préférentiellement la partie de ladite gouttière située en vis-à-vis de ladite extension radiale a une forme conique.

Plus préférentiellement ladite partie conique porte des palettes fixes réparties régulièrement sur la circonférence de ladite partie conique et ayant en coupe radiale, en référence à l'axe de rotation commun, une forme incurvée s'étendant dans le sens opposé au sens de rotation du porte-satellites.
L'invention porte encore sur un module de soufflante d'un turboréacteur double flux comportant un arbre fan entraîné par un réducteur tel que décrit ci-dessus et sur un turboréacteur double flux comportant un tel module de soufflante.

Dans un mode particulier de réalisation le module de soufflante comprend au moins une pièce de support de l'arbre de soufflante par l'intermédiaire de deux roulements, ladite pièce de support comportant une première bride de fixation dudit module conformée pour être rattachée à une seconde bride portée par une pièce structurale du turboréacteur, et le réducteur est porté par un carter de support comportant une bride conformée pour pouvoir se fixer sur ladite seconde bride structurale du turboréacteur, de façon à pouvoir monter ledit réducteur sur ledit module fan préalablement ou simultanément à l'assemblage du module fan sur au moins un autre module du turboréacteur.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue générale d'un turboréacteur double flux à fort taux de dilution,
- la figure 2 est un vue détaillée montrant l'intégration, dans un turbofan, d'un réducteur de la vitesse de rotation de l'arbre fan, à train épicycloïdal,
- la figure 3 est une vue du module fan du turbofan de la figure 1,
- la figure 4 est une vue détaillée du réducteur de la figure 2, équipé d'un système de lubrification,
- la figure 5 est une vue éclatée, en perspective, du réducteur de la figure 4,
- la figure 6 est une vue de face du réducteur de la figure 2, équipé d'un système de récupération de l'huile de lubrification, selon un mode de réalisation de l'invention,
- la figure 7 est une vue éclatée, en perspective, du dispositif de récupération d'huile du réducteur de la figure 6,
- la figure 8 est une vue de détail, de face, du dispositif de la figure 7, et
- la figure 9 est une seconde vue éclatée, en perspective, du dispositif de récupération d'huile du réducteur de la figure 6.

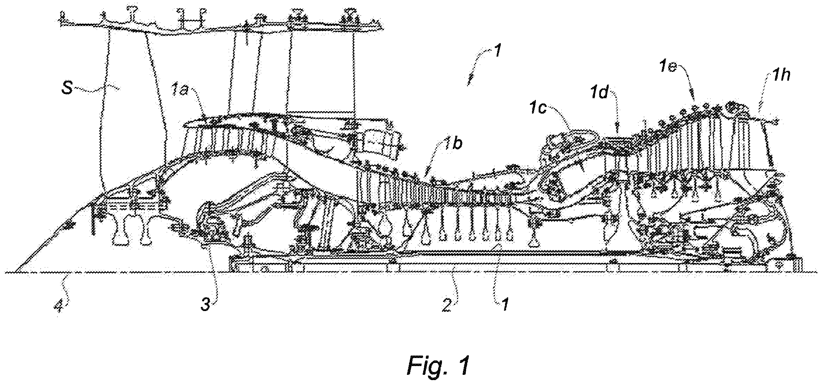

En se référant à la figure 1, on voit un turboréacteur 1 qui comporte, de manière classique, une soufflante S, un compresseur basse pression 1a, un compresseur haute pression 1b, une chambre de combustion 1c, une turbine haute pression 1d, une turbine basse pression 1e et une tuyère d'échappement 1h. Le compresseur haute pression 1b et la turbine haute pression 1d sont reliés par un arbre haute pression 1 et forment avec lui un corps haute pression (HP). Le compresseur basse pression 1a et la turbine basse pression 1e sont reliés par un arbre basse pression 2 et forment avec lui un corps basse pression (BP).

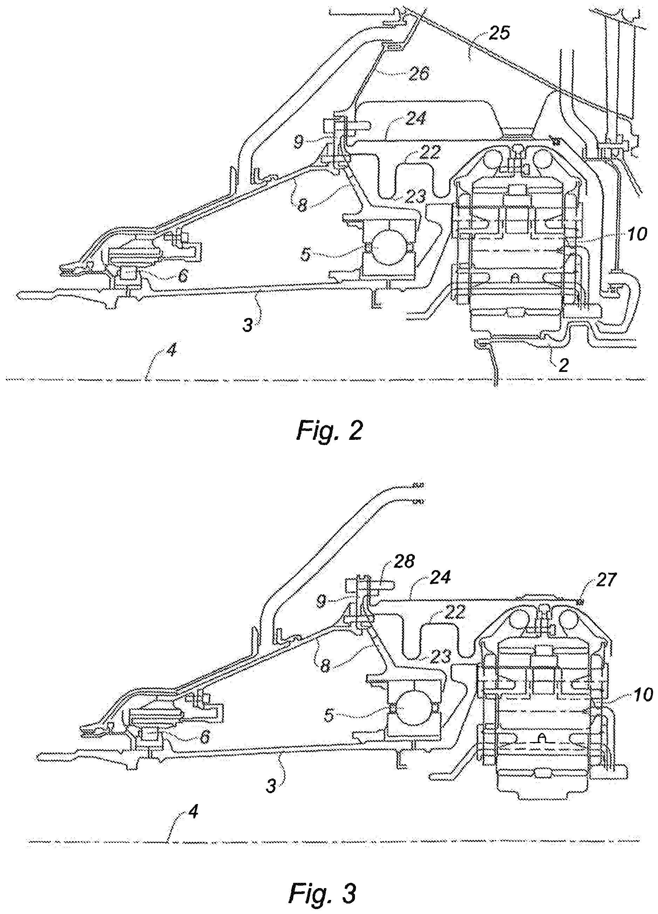

Dans la configuration représentée qui concerne un turbofan classique, sans réducteur, le disque sur lequel sont montées les aubes de la soufflante S est entraîné par un arbre fan 3, ou tourillon BP, qui est lui-même entraîné directement par l'arbre BP 2. Dans l'invention représentée sur les figures 2 à 7, l'arbre fan 3 est entraîné par l'arbre BP 2 au travers d'un réducteur 10 à train épicycloïdal.

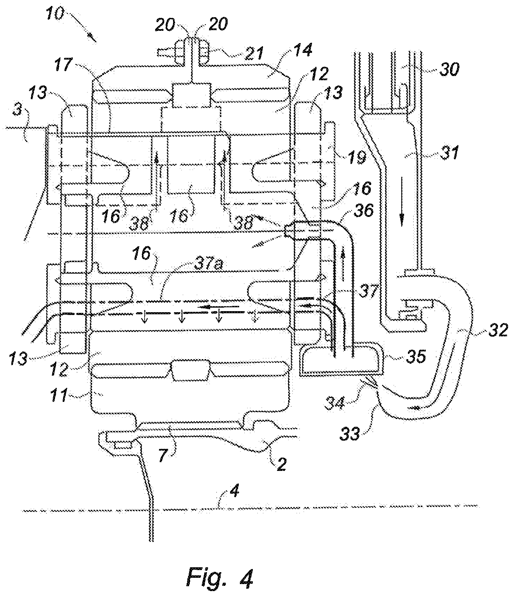

La figure 2 montre le positionnement du réducteur 10 dans la partie avant du turboréacteur 1. Les aubes de la soufflante S sont portées par l'arbre fan 3 qui est relié à la structure du moteur par l'intermédiaire d'un roulement à billes 5, qui transmet les efforts de poussée, et d'un roulement à rouleaux 6, qui autorise les dilatations longitudinales de l'arbre fan. Les paliers de ces deux roulements sont fixés sur une ou plusieurs pièces formant support de l'arbre fan 3, qui est rattachée à la structure du turboréacteur au niveau d'une bride de support du module fan 9. L'arbre fan 3, qui appartient avec la pièce support 8, les aubes de soufflante S et les deux roulements 5 et 6 au module fan, est entraîné par son extrémité aval par le porte-satellites 13 du réducteur 10. De son côté l'arbre BP 2 est relié au planétaire 11 du réducteur 10 par ses cannelures 7, comme explicité plus loin en référence à la figure 4.

Le réducteur 10 est fixé, par l'intermédiaire de brides de fermeture et de support 20 qui s'étendent radialement à partir de la couronne du train épicycloïdal, à une des extrémités d'un carter de support 22, qui assure ainsi le maintien en place du réducteur sur l'arbre fan 3 et son positionnement par rapport à l'arbre BP 2. L'autre extrémité du carter de support 22 est fixée sur la structure du turboréacteur, sur une bride 26 de rattachement du module fan, qui s'étend radialement à partir d'une pièce structurale du turboréacteur, ou carter d'appui 25. Le carter de support 22 est cylindrique et comporte sur son extension longitudinale des ondulations axiales 23, représentées au nombre de deux, afin de donner une certaine souplesse radiale et assurer un montage souple au réducteur. Un tel degré de liberté évite que celui-ci soit bridé sur la structure et qu'il subisse des contraintes importantes lors des vibrations ou des déplacements par dilatation des divers éléments constitutifs du turboréacteur.

Un jeu J est laissé circonférentiellement autour de la couronne pour permettre au réducteur de se déplacer radialement sans interférer avec la structure du turboréacteur. Il est dimensionné pour permettre au réducteur de flotter dans son carter en conditions normales et n'être consommé qu'en cas de perte ou de rupture d'une aube de la soufflante. Pour cela, en regard de la couronne extérieure 14 du réducteur 10 est disposé le carter structural d'appui 25 qui comporte des nervures contre lesquelles la couronne peut venir buter si elle se déplace radialement d'une valeur supérieure au jeu J. Ce carter d'appui 25 vient reprendre les efforts générés par l'appui de la couronne 14 lors de la rupture ou de la perte d'une aube de soufflante. Entre le carter de support 22 et le carter d'appui 25 se trouve un carter 24 de pressurisation de l'enceinte du réducteur 10 pour faciliter l'évacuation de son huile de lubrification, comme cela sera expliqué plus loin.

La figure 3 montre les divers éléments du module fan, qui sont assemblés au niveau d'un moyen de fixation 28, du type boulon, sur la bride 26 du carter d'appui 25. Ce boulon 28 a vocation à fixer sur la bride de rattachement 26, tant les pièces 8 de support des paliers 5 et 6 appartenant au module fan, et par suite la soufflante S, que les carters de support 22 et de pressurisation 24 du réducteur 10. On remarque que le montage du réducteur 10 sur la structure du module fan s'effectue dans le sens allant de l'aval vers l'amont du turboréacteur, son positionnement étant assuré par des doigts 17 de centrage sur l'arbre fan 3 comme cela sera expliqué plus loin, et par la coopération de son carter de support 22 avec la bride 26 et les moyens de fixation 28. Enfin le carter de pressurisation 24 qui est cylindrique et qui entoure le réducteur, peut être mis en place, lui aussi en provenance de l'aval jusqu'à ce que son extrémité amont vienne coopérer avec la bride de rattachement 26 et les moyens de fixation 28. Ce carter de pressurisation 24 a pour objet de créer une enceinte autour du réducteur qui soit à une pression supérieure à celle qui l'environne, celle-ci étant mise en dépression par une pompe d'aspiration de l'huile du réducteur 10. Le branchement du circuit de récupération de l'huile du réducteur sur cette enceinte extérieure permet de mieux évacuer l'huile du réducteur et ainsi d'éviter les phénomènes de barattage. Le carter de pressurisation comporte ainsi à son extrémité aval une rainure dans laquelle est positionné un joint torique 27 pour assurer l'étanchéité de cette enceinte après montage du module fan sur la structure du moteur.

La figure 4 montre en demi-coupe radiale la partie supérieure du réducteur 10, la partie inférieure étant située symétriquement par rapport à l'axe de rotation 4 de la turbomachine, qui apparaît en bas de la figure. Le réducteur 10 est enfermé extérieurement dans sa couronne 14, qui n'est pas mobile en rotation et qui est fixée sur la structure du moteur au niveau de ses brides de fermeture et de fixation 20. La couronne 14 est en effet réalisée en deux parties pour permettre la mise en place de tous les éléments constituant le réducteur et ces deux parties sont attachées l'une à l'autre par une série de boulons d'assemblage 21, au niveau des brides 20 qui s'étendent radialement à partir de la couronne. L'extrémité correspondante du carter de support 22 est, elle aussi, fixée sur les brides de fermeture 20 par les boulons d'assemblage 21.

Le réducteur embraye, d'une part, sur des cannelures 7 de l'arbre BP 2 par l'intermédiaire des pignons d'engrenage du planétaire 11 du train épicycloïdal, et d'autre part sur l'arbre fan 3 qui est rattaché au porte-satellites 13 de ce même train épicycloïdal. Classiquement le pignon planétaire 11, dont l'axe de rotation est confondu avec celui 4 de la turbomachine, entraîne une série de pignons satellites 12, qui sont répartis régulièrement sur la circonférence du réducteur. Ces satellites 12 tournent eux aussi autour de l'axe 4 de la turbomachine, en roulant sur la couronne 14 qui est rattachée à la structure de la turbomachine par le carter de support 22. Au centre de chaque satellite est positionné un axe de satellite 16 relié à un porte-satellites 13, le satellite tournant librement autour de cet axe à l'aide d'un palier qui peut être lisse, comme représenté sur la figure 4, ou comporter un roulement à rouleaux dans des configurations alternatives. La rotation des satellites autour de leur axe de satellite 16, du fait de la coopération de leurs pignons avec ceux de la couronne 14, entraîne la rotation du porte-satellites 13 autour de l'axe 4, et par conséquent celle de l'arbre fan 3 qui lui est lié, à une vitesse de rotation qui est inférieure à celle de l'arbre BP 2.

L'entraînement de l'arbre fan 3 par le porte-satellites 13 est assuré par une série de doigts de centrage 17, répartis régulièrement sur la circonférence du réducteur, qui s'étendent à partir de l'arbre fan et qui s'enfoncent dans des alésages pratiqués dans le porte-satellites. Le porte-satellites 13 s'étend symétriquement de part et d'autre du réducteur pour refermer l'ensemble et former une enceinte, dans laquelle pourra être mise en oeuvre une fonction de lubrification. Des douilles 19 complètent la fermeture de cette enceinte en l'obturant au niveau des axes de satellites 16, de chaque côté du réducteur.

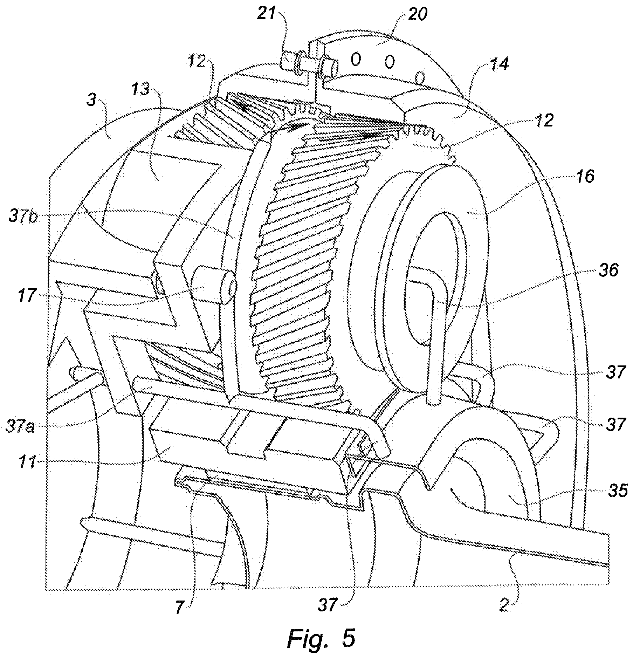

La figure 4 montre par ailleurs, avec la figure 5, l'acheminement de l'huile de lubrification vers le réducteur 10 et son cheminement à l'intérieur de celui-ci. Des flèches montrent sur la figure 4 le cheminement suivi par l'huile depuis un réservoir d'huile spécifique, dit réservoir tampon 31, jusqu'aux pignons et aux paliers à lubrifier.

Le réservoir tampon 31 est positionné à côté du réducteur, en partie haute de façon que l'huile puisse s'écouler vers le centre du réducteur par gravité. Ce réservoir 31 est alimenté par une canalisation d'acheminement 30, en provenance du réservoir principal du moteur (non représenté). L'huile s'écoule du réservoir tampon 31, pour déboucher dans un injecteur 32 dont l'extrémité calibrée est resserrée pour former un gicleur 33. L'huile sort du gicleur sous la forme d'un jet 34, qui est formé par la pression produite par le poids de la colonne d'huile située au dessus de lui. Ce jet 34 est orienté avec une composante radiale dirigée vers l'extérieur du moteur et aboutit dans une coupelle cylindrique 35 à section radiale en U, dont l'ouverture du U est orientée en direction de l'axe de rotation 4. Alors que l'injecteur 32 et son gicleur 33 sont fixes, la coupelle 35 est mobile en rotation autour de l'axe 4 et présente à tout instant une partie en U en face du gicleur. L'ouverture du fond en U de la coupelle 35 se situant en face de l'axe de rotation 4 et les bords du U étant orientés en direction de cet axe, la coupelle 35 forme une cavité de retenue de l'huile, ce qui assure la réception de l'huile du jet 34. La séparation physique existant entre le gicleur 33 et la coupelle 35 permet un découplage du réducteur 10 du module du compresseur BP et offre ainsi la possibilité de fixer le réducteur sur le module fan. Cette configuration autorise un montage modulaire du turboréacteur, sans que le circuit d'alimentation en huile n'interfère lors de l'installation du module fan sur le carter structural 25 ou même ne nécessite une opération spécifique d'assemblage.

L'huile est entraînée en rotation par la coupelle 35 dans le fond de laquelle elle se comprime sous l'action de la force centrifuge. Du fond de la coupelle partent une série de canalisations pour l'alimentation en huile des divers organes à lubrifier. Ces canalisations, telles que représentées sur les figures 4 et 5, sont essentiellement de deux types. Une première série de canalisations 36, qui sont régulièrement réparties sur la périphérie du réducteur et en nombre égal à celui des pignons satellites 12, partent du fond de la coupelle 35 et pénètrent dans l'enceinte interne de chaque arbre de satellite 16, qui est refermée par le porte-satellites 13. Une seconde série de canalisations 37, qui sont également réparties régulièrement sur la périphérie du réducteur, partent du fond de la coupelle 35 pour se diriger dans l'espace situé entre deux pignons satellites 12 consécutifs.

L'huile qui circule dans les premières canalisations 36 pénètre dans la cavité interne de chaque axe de satellite 16 puis passe, du fait de la force centrifuge, dans des canaux de guidage 38, qui traversent ces axes en étant orientés radialement. Ces canaux 38 débouchent à la périphérie des axes de satellites 16, au niveau de leurs paliers supportant les satellites 12 et assurent ainsi la lubrification de ces paliers.

Les secondes canalisations 37 cheminent, depuis le fond de la coupelle 35 entre les satellites 12 et se divisent en plusieurs canaux 37a, 37b qui acheminent l'huile vers les engrenages formés par, d'une part, les pignons des satellites 12 et ceux du planétaire 11 et, d'autre part, les pignons des satellites 12 et ceux de la couronne 14. L'ensemble des paliers et engrenages du réducteur 10 est ainsi lubrifié par l'huile qui est issue du gicleur 33 et qui est récoltée par la coupelle 35 située en face de lui. Chaque seconde canalisation 37a s'étend axialement le long du pignon satellite, entre le pignon satellite 12 et le planétaire 11, et forme une rampe de lubrification sur toute la largeur des deux pignons. La canalisation 37b, qui alimente l'engrenage entre la couronne 14 et les satellites 12, projette son huile au centre du cylindre formé par chaque satellite. Comme représentés, ceux-ci sont réalisés sous la forme de deux séries de pignons parallèles. Leur denture est orientée en diagonale par rapport à l'axe de rotation du satellite 12, de façon à leur donner une fonction de rainures dans lesquelles l'huile est entraînée, depuis le milieu du cylindre jusqu'à sa périphérie, pour lubrifier l'engrenage sur toute sa largeur.

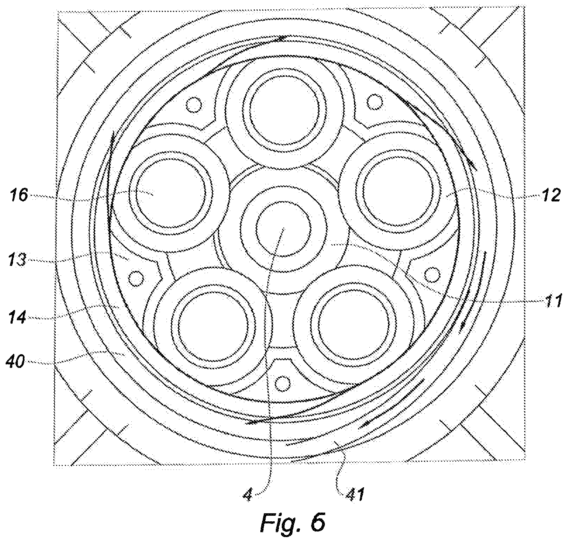

La figure 6 montre, en vue de face un réducteur épicycloïdal, à couronne 14 fixe, équipé d'un dispositif de récupération de l'huile selon l'invention. Autour de la couronne 14 sont disposées deux gouttières symétriques 40 de récupération de l'huile qui font le tour du réducteur et qui se terminent en un point de la circonférence par deux écopes 41 qui se détournent de leur gouttière 40 pour évacuer l'huile collectée et la renvoyer au réservoir principal du moteur.

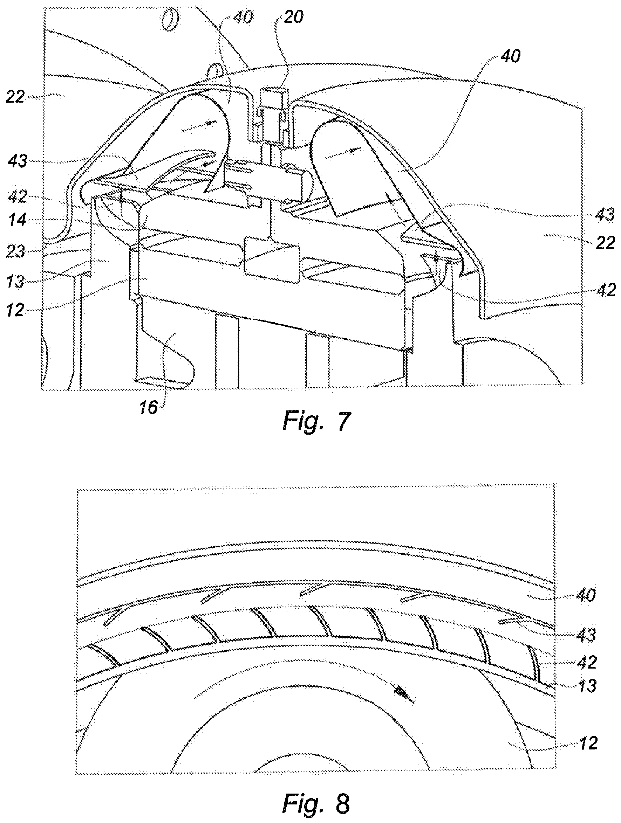

La figure 7 montre le détail du dispositif de récupération d'huile au niveau de l'engrenage formé par les pignons d'un satellite 12 et de la couronne 14. Autour de la couronne 14 sont disposées deux gouttières symétriques 40 de récupération de l'huile qui font le tour du réducteur et qui se terminent en un point de la circonférence par deux écopes 41 qui se détournent de leur gouttière 40 pour évacuer l'huile collectée qui sera récupérée dans l'enceinte de lubrification avant du moteur et qui sera renvoyée vers le réservoir principal du moteur. Comme indiqué précédemment l'huile s'écoule le long des dents des pignons, et est dirigée vers l'extérieur par les pignons du satellite 12 dont les dents sont orientées obliquement. La partie supérieure du porte-satellites 13 a sensiblement la forme d'un quart de tore 44 qui se déploie axialement en s'éloignant de la partie haute du satellite, en dessous de l'engrenage satellite-couronne, puis qui se redresse pour s'orienter radialement en face de la couronne 14. Ce faisant il constitue un réceptacle pour les gouttelettes d'huile projetées par l'engrenage. Celles-ci sont déviées de la direction axiale qu'elles ont en sortie des pignons du satellite 12 pour être réorientées dans une direction radiale à l'extrémité du quart de tore 44, d'où elles sont éjectées par centrifugation, Au niveau de sa circonférence extérieure, le porte-satellite 13 porte des palettes 42 qui sont situées régulièrement sur sa circonférence et qui s'étendent radialement de façon à se positionner en face de cet engrenage. Elles sont disposées à l'intérieur de ce quart de tore 44, sensiblement dans un plan radial du tore. Ces palettes tournent avec le porte-satellites et ont axialement une forme courbe pour faciliter l'éjection vers l'extérieur du porte-satellites, des gouttelettes d'huile qui s'échappent de l'engrenage. Les palettes tournantes 42 sont cependant incurvées par rapport à ce plan radial pour faciliter le détachement et l'éjection des gouttelettes dans le plan du porte-satellites 13.

En face de ces palettes tournantes 42 sont positionnées des palettes fixes 43 qui sont attachées sur chaque gouttière 40 pour former des moyens de captation de l'huile et de redressement de son écoulement. Elles sont soudées sur la gouttière 40 au niveau de l'extrémité radiale extérieure du porte-satellites. Ces palettes fixes ont la forme de petites plaques incurvées qui sont positionnées circonférentiellement en partie basse de la gouttière 40, avec un angle d'incidence par rapport au cercle de la partie basse de la gouttière. Radialement ces palettes fixes s'étendent suffisamment pour recouvrir toute l'extension radiale du porte-satellites et ainsi capter toutes les gouttelettes d'huile que celui-ci éjecte. Ces palettes permettent de rediriger le flux d'huile, pour le canaliser tangentiellement dans le sens de la gouttière, afin de maximiser la vitesse d'écoulement de cette huile.

Les deux gouttières 40 sont placées de façon symétrique par rapport au plan médian du réducteur 10, de façon à récupérer l'huile qui est éjectée, tant du côté de l'arbre fan 3 que du côté opposé. A cette fin le porte-satellites 13 comporte sur ses deux faces le même dispositif d'éjection de l'huile, avec une forme en un quart de tore 44 muni de palettes tournantes. Chaque gouttière enveloppe, du côté extérieur, la partie haute du porte-satellites 13 puis comporte, en se rapprochant du plan médian, une surface conique qui est destinée à renvoyer l'huile vers le fond de la gouttière. Elle se poursuit ensuite par une forme en demi-tore dont le fond forme un canal pour l'écoulement de l'huile autour du réducteur 10. Dans le mode de réalisation présenté sur la figure 7, chaque gouttière s'étend enfin vers l'intérieur jusqu'à revenir radialement au niveau de la couronne 14, de façon à fournir une protection contre les projections d'huile sur les brides 20 et les boulons d'assemblage 21.

Sur la figure 8 sont indiquées, en coupe radiale la forme et la disposition relative des palettes mobiles 42 et des palettes fixes 43. Des flèches indiquent le cheminement de l'huile, lors de sa projection par le porte-satellites 13 et de sa récupération par la gouttière 40.

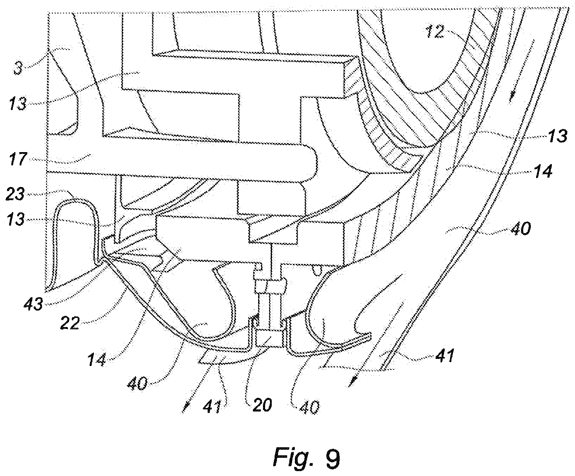

Enfin sur la figure 9 est représentée la partie basse du réducteur 10 et de ses moyens de récupération de l'huile. L'huile éjectée par le porte-satellites au niveau de chacun des engrenages formés par des pignons de satellites 12 et de la couronne 14, parvient dans une des gouttières 40 et est entraînée circulairement dans cette gouttière du fait de son inertie. A leur point bas les gouttières s'ouvrent vers le bas et comportent une ouverture en forme d'écope 41 par laquelle l'huile récupérée peut s'extraire du réducteur 10. Cette écope traverse tout d'abord le carter de support 22, puis le carter de pressurisation 24 avec lequel elle est en contact étanche de façon à bénéficier de l'aspiration créée par une mise en dépression de la cavité externe à ce carter de pressurisation. Un dispositif, non représenté, peut alors l'acheminer en retour vers le réservoir principal d'huile, après un éventuel dégazage et un passage au travers d'un échangeur de chaleur. L'absence de liaison physique entre les gouttières 40 et le carter structural 25, permet un assemblage du réducteur sur le module fan sans interférence avec la structure du turboréacteur et donc un montage modulaire de ce module fan.

On va maintenant décrire le fonctionnement du circuit de lubrification, en premier lieu pour l'alimentation en huile des paliers et engrenages du réducteur et, en second lieu, pour la récupération de cette huile selon l'invention, après son utilisation.

L'huile s'écoule par gravité depuis le réservoir tampon 31 dans l'injecteur 32. Sous la pression de la pompe d'alimentation et de la colonne d'huile située au dessus du gicleur 33, l'huile est éjectée et est récupérée par la coupelle tournante 35 dans laquelle elle se répand sous l'action du champ de forces centrifuges qui y règne. Elle passe ensuite dans les premières et secondes canalisations 36 et 37 de chaque satellite 12.

L'huile qui passe par la première canalisation 36 pénètre dans la cavité interne du pignon satellite 12 correspondant et est alors soumise simultanément au champ de forces centrifuges précédent et au champ dû à la rotation du pignon satellite autour de son axe de satellite 16. Elle traverse l'épaisseur du pignon 12 grâce aux canaux de guidage 38 de ce satellite et vient lubrifier le palier situé entre le satellite 12 et son axe de satellite 16. Il est à noter que le champ d'accélération centrifuge donne lieu à un gradient de pression le long du tuyau et que ce gradient se traduit par une pression suffisamment importante (environ 5 bars) au niveau du palier, pour pouvoir l'alimenter.

De son côté, l'huile qui passe par la seconde canalisation 37, se divise entre la canalisation 37a d'alimentation du planétaire et la canalisation 37b d'alimentation de l'engrenage satellite-couronne. La canalisation 37a éjecte de l'huile sur toute la largeur des deux pignons grâce à sa rampe de lubrification. La canalisation 37b remonte le long du pignon satellite jusqu'au niveau de son engrenage sur la couronne 14 et se termine par un gicleur qui lubrifie ce dernier. De préférence, l'huile est envoyée sur les dents qui sortent de l'engrènement, de façon à les refroidir immédiatement après leur échauffement. L'orientation oblique donnée aux dents du satellite 13 provoque l'écoulement de l'huile depuis le milieu du pignon vers l'extérieur et assure, donc, une lubrification répartie de façon homogène pour tout cet engrenage.

L'ensemble des paliers et engrenages du réducteur, qui pour la plupart sont mobiles en rotation autour de l'axe du turboréacteur, est ainsi lubrifié à partir d'un réseau d'alimentation en huile qui est situé sur la partie fixe de ce même turboréacteur et qui n'a pas de liaison physique avec le réducteur.

La récupération de l'huile repose principalement sur l'utilisation de la force centrifuge qui s'exerce sur elle en sortie de l'engrenage constitué par les pignons du satellite 12. Elle est éjectée axialement de cet engrenage et tombe sur l'extrémité radiale extérieure du porte-satellites 13. Elle est récupérée par cette extrémité en quart de tore 44 et se dirige vers le haut du quart de tore pour être éjectée radialement, du fait de la vitesse de rotation du porte-satellite 13. Elle est éjectée vers l'extérieur du porte-satellite par l'accélération centrifuge, qui atteint 1200g, avec une vitesse linéaire typiquement de l'ordre de 230 km/h. Les palettes tournantes 42, qui sont montées optionnellement à l'extérieur du porte-satellite 13 dans une variante de l'invention, font office d'éjecteur centrifuge et facilitent ce mouvement d'éjection. Elles empêchent ainsi que des gouttes d'huile ne retombent à l'intérieur du réducteur 10 et ne produise du barattage.

L'huile est récupérée par les palettes fixes 43 des gouttières 40 qui sont situées axialement en vis-à-vis des palettes tournantes. L'huile arrive ainsi tangentiellement aux surfaces coniques des gouttières, qui se situent en vis-à-vis des palettes tournantes 42 du porte-satellite 13. Ces surfaces coniques redirigent l'huile vers le fond de la gouttière 40 et éloignent l'huile des engrenages, éliminant tout risque de barattage. Là encore la présence de palettes est optionnelle, la récupération de l'huile pouvant se faire, dans une version simplifiée, directement sur la partie conique des gouttières. Mais elles présentent l'avantage, en étant positionnées en vis à vis des palettes tournantes 42, de mieux diriger le filet d'huile vers le fond de la gouttière 40.

L'huile glisse circonférentiellement sur les palettes fixes 43, du fait de la vitesse qu'elle a acquise lors de sa rotation sur le porte-satellites 13, pour passer dans la gouttière 40. Elle vient alors se loger dans le fond de cette gouttière, tout en conservant une vitesse circonférentielle, puis elle décrit la partie de la circonférence qui l'amène de son point d'extraction du porte-satellites au point bas du réducteur. Elle est alors extraite du réducteur 10, en étant détournée par l'écope 41 qui s'étend à partir de la gouttière 40 en direction de l'extérieur du réducteur 10. Elle traverse, par cette écope 41, le carter de support 22 et le carter de pressurisation 24 pour se retrouver dans l'enceinte extérieure du réducteur, grâce à sa vitesse propre et à l'aspiration créée dans cette enceinte extérieure par la pompe à huile.

L'invention repose principalement sur l'utilisation de la force centrifuge qui est générée par le mouvement de rotation du porte-satellites 13 et qui permet d'éjecter l'huile hors de l'environnement des pignons. Ainsi l'huile ne reste pas en contact avec les pignons et il n'y a pas de barattage. La fonction centrifuge étant assurée par le porte-satellites 13, elle est particulièrement efficace du fait de sa vitesse de rotation et est compatible d'un réducteur dont la couronne 14 est fixe. Le dispositif résout le problème technique posé par un contournement de cette couronne fixe, grâce à une double éjection, des pignons du satellite 12 vers le porte-satellites 13, puis du porte-satellites, mobile en rotation, vers le collecteur, fixe, de la gouttière 40.

Par ailleurs elle se caractérise également par une double coupure entre les éléments constitutifs du module fan et la structure du moteur, ce qui permet un montage autonome du réducteur sur le module fan, et la suppression du besoin de raccorder le circuit d'alimentation en huile de celui-ci au module adjacent, après l'assemblage du module fan sur le turboréacteur. Une première coupure se situe entre le gicleur fixe 33 et la coupelle tournante 35, qui porte sur le circuit d'alimentation en huile, et une seconde coupure se situe au niveau du carter de pressurisation 24 qui assure une étanchéité avec la structure du moteur au niveau de son joint torique 27.

La coupure sur le circuit d'alimentation en huile est située en aval du réducteur ce qui fait que celui-ci peut être fixé sur le module fan avant le montage de ce module sur la structure du turboréacteur, sans qu'il soit besoin d'imaginer des moyens de fixation du circuit d'huile sur ce réducteur a posteriori. De même le carter de pressurisation 24 présente à son extrémité aval un moyen de rattachement 27 à la structure du turboréacteur qui se met en place par simple enfoncement, à la suite d'une translation longitudinale lors du montage du module fan sur ladite structure.

Là encore le rattachement du module fan au reste du moteur ne nécessite aucune opération d'assemblage postérieurement à la mise en place du module fan.

## Revendications

1. Réducteur à train épicycloïdal, comportant un pignon planétaire (11) mobile en rotation autour d'un axe de rotation (4), et des pignons satellites (12) entraînés par ledit pignon planétaire et mobiles en rotation autour d'axes de satellites (16) portés par un porte satellite (13), lesdits pignons satellites roulant sur une couronne (14) fixe et ledit porte-satellites étant positionné axialement latéralement par rapport à ladite couronne, un engrenage formé par les pignons satellites (12) et la couronne (14) étant conformé pour éjecter axialement une huile de lubrification après usage,
**caractérisé en ce que** le porte-satellites (13) comporte une extension radiale comprenant une portion de surface positionnée en vis-à-vis dudit engrenage et formant moyen de guidage et de déflexion de ladite huile, de sa direction axiale vers la direction radiale pour une éjection par centrifugation à son extrémité, et au moins une gouttière fixe de recueil de l'huile (40) s'étendant radialement au-delà dudit porte-satellites (13) et positionnée axialement en vis-à-vis de ladite extension radiale.

2. Réducteur selon la revendication 1 dans lequel ladite extension radiale a la forme d'une fraction de tore (44).

3. Réducteur selon la revendication 2 dans lequel ladite extension radiale porte des palettes tournantes (42) régulièrement disposées sur la circonférence du porte-satellites en s'étendant à l'intérieur du tore.

4. Réducteur selon la revendication 3 dans lequel les palettes tournantes sont, en coupe radiale en référence à l'axe de rotation commun (4), incurvées dans le sens opposé au sens de rotation du porte-satellites (13).

5. Réducteur selon la revendication 4 dans lequel la partie de ladite gouttière située en vis-à-vis de ladite extension radiale a une forme conique.

6. Réducteur selon la revendication 5 dans lequel ladite partie conique de ladite gouttière de recueil de l'huile (40) porte des palettes fixes (43) réparties régulièrement sur une circonférence de ladite partie conique et ayant en coupe radiale, en référence à l'axe de rotation (4), une forme incurvée s'étendant dans le sens opposé au sens de rotation du porte-satellites (13).

7. Module de soufflante d'un turboréacteur double flux comportant un arbre fan (3) entraîné par un réducteur selon l'une des revendications 1 à 6.

8. Turboréacteur double flux comportant un module de soufflante selon la revendication précédente.

## Patentansprüche

1. Planetenuntersetzungsgetriebe, umfassend ein Planetenrad (11), das um eine Drehachse (4) drehbar ist, und Satellitenräder (12), die von dem Planetenrad angetrieben werden und um Satellitenachsen (16) drehbar sind, die von einem Satellitenträger (13) getragen werden, wobei die Satellitenräder auf einem festen Hohlrad (14) kreisen und wobei der Satellitenträger axial seitlich bezüglich des Hohlrades angeordnet ist, wobei ein Getriebe, das durch die Satellitenräder (12) und das Hohlrad (14) gebildet ist, ausgebildet ist, um nach Gebrauch ein Schmieröl axial auszustoßen,
**dadurch gekennzeichnet, dass** der Satellitenträger (13) eine radiale Ausdehnung, die einen Oberflächenbereich aufweist, der gegenüber von dem Getriebe angeordnet ist und ein Mittel zum Führen und zum Ablenken des Öls von seiner Axialrichtung in die Radialrichtung für ein Ausstoßen durch Zentrifugieren an seinem Ende bildet, und mindestens eine feste Ölauffangrinne (40) aufweist, die sich radial über den Satellitenträger (13) hinaus erstreckt und axial gegenüber der radialen Ausdehnung angeordnet ist.

2. Getriebe nach Anspruch 1, wobei die radiale Ausdehnung die Form eines Torus (44) aufweist.

3. Getriebe nach Anspruch 2, wobei die radiale Ausdehnung rotierende Flügel (42) trägt, die regelmäßig auf dem Umfang des Satellitenträgers angeordnet sind und sich dabei im Inneren des Torus erstrecken.

4. Getriebe nach Anspruch 3, wobei die rotierenden Flügel im Radialschnitt in Bezug auf die gemeinsame Drehachse (4) in die Richtung, die zur Drehrichtung des Satellitenträgers (13) entgegengesetzt ist, gekrümmt sind.

5. Getriebe nach Anspruch 4, wobei der Teil der Rinne, der der radialen Ausdehnung gegenüberliegend angeordnet ist, eine konische Form aufweist.

6. Getriebe nach Anspruch 5, wobei der konische Teil der Ölauffangrinne (40) feste Flügel (43) trägt, die regelmäßig auf einem Umfang des konischen Teils angeordnet sind und im Radialschnitt in Bezug auf die Drehachse (4) eine gekrümmte Form aufweisen, die sich in die Richtung, die zur Drehrichtung des Satellitenträgers (13) entgegengesetzt ist, erstreckt.

7. Gebläsemodul eines Zweikreis-Turbostrahltriebwerks, umfassend eine Gebläsewelle (3), die von einem Getriebe nach einem der Ansprüche 1 bis 6 angetrieben wird.

8. Zweikreis-Turbostrahltriebwerk, umfassend ein Gebläsemodul nach dem vorhergehenden Anspruch.

## Claims

1. Reduction gear having an epicyclic train, comprising a sun gear pinion (11) movable in rotation about a rotation axis (4), planet gears (12) which are driven by said sun gear and movable in rotation about planet shafts (16) which are carried by a planet carrier (13), said planet gears travelling on a fixed ring gear (14) and said planet carrier being axially positioned laterally relative to said ring gear, the gear pair formed by the planet gears (12) and the ring gear (14) being shaped to axially eject the lubrication oil thereof after use,
**characterised in that** the planet carrier (13) comprises a radial extension comprising a surface portion which is positioned opposite said gear pair and which forms a means for guiding and redirecting said oil, from the axial direction thereof to the radial direction, for ejection by means of centrifuging at the end thereof, and at least one fixed oil collection gutter (40) which extends radially beyond said planet carrier (13) and is positioned axially opposite the radial extension.

2. Reduction gear according to claim 1, wherein said radial extension is in the form of a partial torus (44).

3. Reduction gear according to claim 2, wherein said radial extension carries rotating blades (42) which are arranged in a regular manner on the circumference of the planet carrier, extending inside the torus.

4. Reduction gear according to claim 3, wherein the rotating blades are, in radial cross-section with respect to the common rotation axis (4), curved inwards in the opposite direction to the rotation direction of the planet carrier (13).

5. Reduction gear according to claim 4, wherein the portion of said gutter which is located opposite said radial extension is of conical form.

6. Reduction gear according to claim 5, wherein the conical portion carries fixed blades (43) which are distributed in a regular manner over the circumference of said conical portion and which have in radial cross-section, with respect to the common rotation axis (4), an inwardly curved shape which extends in the opposite direction to the rotation direction of the planet carrier (13).

7. Fan module of a bypass turbojet engine comprising a fan shaft (3) which is driven by a reduction gear according to any one of claims 1 to 6.

8. Bypass turbojet engine comprising a fan module according to the preceding claim.
